# EUROPEAN PATENT APPLICATION

(11) **EP 4 531 359 A1**
(43) Date of publication of application: **02.04.2025**
(21) Application number: 23200530.6
(22) Date of filing: 28.09.2023
(51) Int. Cl.: H04L 41/0806, H04L 47/10, H04L 67/01, H04L 67/10, H04L 41/0896

(54) **METHOD TO CONFIGURE A NETWORK FOR IN-NETWORK COMPUTING, METHOD TO OPERATE A NETWORK FOR IN-NETWORK COMPUTING OF NETWORK DATA, WORKFLOW ORCHESTRATION MODULE FOR A NETWORK, NETWORK, COMPUTER PROGRAM PRODUCT AND COMPUTER-READABLE STORAGE MEDIUM**

(71) Applicant: Siemens Aktiengesellschaft, 80333 München (DE)
(72) Inventor: Sauer, Markus, 81739 München (DE); Zeiger, Florian, 85635 Höhenkirchen-Siegertsbrunn (DE)
(74) Representative: Siemens Patent Attorneys

(57) **Abstract**

The invention is concerned with a method to configure a network (2) for in-network computing of network data (5), comprising the following steps performed by a workflow orchestration module (15) of the network (2): receiving a workflow specification (3), the workflow specification (3) defining processing of network data (5) to be performed in a workflow (4) along a network path (6) through the network (2); decomposing the workflow (4) described by the workflow specification (3) into a chain of workflow functions (13) described by respective workflow function specifications (16), wherein the respective workflow functions (13) concern a respective step of the processing of the network data (5) by the workflow (4); assigning the respective workflow functions (13) to the network devices (9); and providing the workflow function specifications (16) assigned to the respective network devices (9) to a function orchestration module (1) of the network (2).

## Description

The invention is concerned with a method to configure a network for in-network computing of network data, a method to operate a network for in-network computing of network data, a workflow orchestration module for a network, a network, a computer program product and a computer-readable storage medium.

Real-time and near real-time processing of data/packets/messages in industrial distributed systems is essential for many industrial use cases and applications. Whereas in the past, data was processed in computing systems after being transmitted to user applications via a number of communication devices, recent developments in communication network systems allow parts of the processing of a distributed application to be distributed to the network devices. Network devices are increasingly capable of performing additional functions in addition to packet forwarding. In the network, processing is not only possible on intelligent edge devices used for distributed sensor data aggregation, but also on network devices capable of performing functions on data packet payloads or sensor data values. Of course, packet payload manipulation must be transparent, secure, and reliable. For this reason, data can be pre-processed as it travels over a network device, which can include filtering, data fusion, or event detection. This processing on network devices is called in-network computing.

The network data may be processed by at least one of the network devices along a network path. A workflow of processing the network data to be performed by the network may have certain workflow requirements. The workflow requirements depend on the processing of the network data to be performed during the workflow. According to the state of the art, workflows are performed on sensor devices of the network. However, it is possible that a workflow may have workflow requirements that are too high for a single network device. It is possible that the workflow requirements include an execution time, available memory, or device type that cannot be met by the network device.

It is an objective of the present invention to provide a solution for enabling the processing of network data in a network with a higher level of workflow requirements.

This objective is achieved by the respective subject matter of the independent claims. Further implementations and preferred embodiments are subject matter of the dependent claims.

A first aspect of the invention relates to a method of configuring a network for in-network processing of network data, the method comprising a step of receiving a workflow specification by a workflow orchestration module. The workflow specification defines a processing of network data to be performed in a workflow along the network path through the network. In other words, the workflow orchestration module of the network receives the workflow specification. The workflow specification defines how network data is to be processed during the transmission of the network data from a source device to a target device along a network path. For example, the workflow specification may describe filter parameters that describe filtering of the network data during transmission. The workflow specification may describe workflow input data to be provided to the workflow and workflow output data to be provided by the workflow. The workflow specification may define multiple steps to be performed in the workflow.

In a next step, the workflow orchestration module decomposes the workflow described by the workflow specification into a chain of workflow functions. Each workflow function is described by a function specification. The respective workflow functions concern a respective step of the processing of the network data by the workflow. In other words, the processing of the network data by the workflow can be separated into respective steps of the workflow, where the processing performed on a respective step is performed by a respective workflow function. The respective workflow functions are identified by the workflow orchestration module. Thus, it may be possible to transform the workflow into a chain of workflow functions. The respective workflow function may describe a mathematical function, an algorithm and/or a general operation.

In the next step, the workflow orchestration module assigns the respective workflow functions to the network devices along the network path. In other words, since the workflow is separated into the respective workflow functions, it is possible to distribute the workflow functions to the network devices along the network path. The distribution may depend on the capabilities of the respective network devices.

The next step is for the workflow orchestration module to make the function specifications associated with each network device available to a function orchestration module on the network. In other words, to configure the respective network devices to perform the workflow functions, the function specifications assigned to the respective network devices are provided to a function orchestration module of the network. The function orchestration module of the network is configured to configure the respective network devices to perform the respective functions specified by the function specification.

The invention has the advantage that it is possible to divide a workflow into workflow functions. The respective workflow functions may have lower functional requirements than the workflow itself. Therefore, the distribution of the workflow functions along the network devices allows the execution of complex workflows by the network.

According to a further embodiment of the invention, the method comprises steps to be performed by the function orchestration module of the network. The function orchestration module receives function specifications associated with respective network devices.

A next step comprises generating respective compute functions for the network devices configured to perform the respective steps of processing the network data according to the function specifications. In other words, the function specifications may describe the steps to be performed by the respective network device. To enable the respective network device to perform the respective steps, it is necessary to generate the respective compute function for the network device. The compute function can be dependent on the function specification and the network device. In other words, the compute function may be configured to enable a specific of the network devices to perform the step of the respective workflow function. The compute function may depend on capabilities and/or supported commands of the respective network device.

A next step comprises generating respective network functions for the respective network devices, wherein the network functions are configured to forward the network data received by the respective network devices to the compute functions operated by the respective network devices and to forward the processed specific network data along the network path. In other words, the respective network devices provide a programmable forwarding plane. The programmable forwarding plane is configured to forward network data. To configure the programmable forwarding plane to provide the network data received by the respective network device to the compute function and to configure the respective network device to forward the processed network data along the network path, it is necessary to generate the respective network function.

The network function may be configured to identify the specific network data to be forwarded to the compute function operated by the network device. In other words, the network device may receive data from the network at a respective network function operated in the programmable forwarding plane, which may be configured to receive data from the network and to relay the data. The network function operated in the programmable forwarding plane is configured to identify the specific network data received by the network device and to forward the specific network data to the compute function operated by the network device. The identification and/or the forwarding of the specific network data may depend on header data and/or meta data of the network data. The network function or another network function operated in the programmable forwarding plane is configured to receive the processed network data from the compute function and to forward the processed network data to the network according to a configuration of the network function. The processed network data may be forwarded to a subsequent network device.

In a next step, the respective compute functions and the respective network function are provided to the respective network devices. In other words, the network orchestration module provides the compute functions and the network functions to the respective network devices. The network devices may execute the compute functions provided by the function orchestration module to process the payload of the specific network data. The network devices may execute the network function in their forwarding plane to allow a provision of the specific network data to the compute function. The network functions may also receive the processed network data from the compute function and may forward the processed data to the network.

The idea of the step is that the function orchestration module generates a bundle for the respective network devices, comprising the at least one compute function for the respective device and the at least one network function for the respective device. The at least one compute function is configured to process the payload of the specific network data on the respective network device. The at least one network function is configured to transmit the specific network data, received by the respective network device to the at least one compute function operated by the respective network device. The at least one network function is configured to transmit the processed network data, provided by the at least one compute function of the respective device to the network. The at least one network function may for example send the processed network data to at least one other network device of the network or the target device.

The embodiment has the advantage that the respective compute function required to process the network data is generated by the function orchestration module.

According to a further embodiment of the invention, assigning the respective workflow functions to the network devices along the network path comprises examining the functional requirements of the respective workflow functions and assigning the respective workflow functions to the network devices depending on the network device capabilities of the respective network devices. In other words, the respective workflow functions are distributed to the respective network devices along the network path. The workflow orchestration module is configured to examine the functional requirements that describe the requirements for the network device to perform the particular workflow function. It is possible that the Workflow Orchestration Module may determine the amount of memory required to perform each workflow function. The capabilities of each network device may be made available to the Workflow Orchestration Module. Therefore, the workflow orchestration module is configured to determine whether a particular one of the network devices is configured to perform the particular workflow function. The workflow orchestration module may distribute the workflow functions among the network devices according to the requirements of the particular workflow function and the capabilities of the particular network devices. It is possible that one of the network devices along the network path may not be assigned to a particular workflow function because it does not have sufficient capabilities. It is possible that more than one of the workflow functions may be assigned to one of the network devices.

The embodiment has the advantage that the processing of the network data by the respective workflow functions is distributed along the network devices according to the capabilities of the respective network devices.

According to a further embodiment of the invention, assigning the respective workflow functions to the network devices along the network path comprises investigating the quality of service requirements of the respective workflow functions and assigning the respective workflow functions to the network devices depending on the forwarding capabilities of the programmable forwarding plane of the respective network devices. In other words, the workflow orchestration module can examine the quality of service requirements of the respective workflow functions. Since the forwarding capabilities of the respective programmable forwarding planes are provided to the workflow orchestration module, the workflow orchestration module may determine which of the network devices meets the respective quality of service requirements for performing the respective workflow function. The workflow orchestration module may distribute the respective workflow functions across the network devices depending on the forwarding capabilities of the respective programmable forwarding planes of the network devices.

According to a further embodiment of the invention, the assignment of the respective workflow functions to the network devices along the network path comprises a check whether the respective workflow functions are parallelizable. In other words, the workflow orchestration module examines whether the respective workflow function can be parallelized. The workflow orchestration engine assigns parallelizable workflow functions to at least two of the network devices. For example, it may be possible to route the network flow through two of the network devices that perform the same workflow function. The workflow can be split by a preceding network device and routed to the two network devices. After processing of the network data by the two network devices, the network flow may be merged in a subsequent network device. The embodiment has the advantage that a performance of the processing of the network data can be increased by parallelization.

According to a further embodiment of the invention, generating the compute function comprises steps of retrieving at least one compute function template from a function repository module in accordance with the workflow function specification. In other words, the network comprises a function repository module, wherein compute function templates are stored in the function repository module. The network orchestration module is configured to retrieve the at least one compute function template from the function repository module in accordance with the workflow function specification. The compute function templates may define predefined compute functions, wherein parameters of the compute function template must be incorporated by the network orchestration module. In a next step, the network orchestration module configures the at least one compute function template according to the workflow function specification. In other words, the network orchestration module may set parameters of the at least one compute function template to perform data processing according to the workflow function specification. The network orchestration module may also retrieve multiple compute function templates and combine the compute function templates into the compute function. In a final step, the network orchestration module generates a compute function based on the at least one configured compute function template. The embodiment has the advantage that compute function templates can be provided by the function repository. The embodiment has the advantage that the generation of compute functions is simplified.

According to a further embodiment of the invention the compute function is configured as an application running in an operation system of the network device. In other words, the network orchestration module is configured to generate the compute function as the application running in the operation system of the network device.

According to a further embodiment of the invention the compute function is configured as an application running on a data processing unit of a network interface card of the network device. In other words, the network orchestration module is configured to generate the compute function as the application to operate on the data processing unit of the network interface card of the network device.

A second aspect of the present invention is related to a method to operate a network for in-network computing of network data.

Network devices of the network may be configured during a method according to the first aspect of the invention.

The method comprises the following steps performed by respective network devices of a network device chain along a network path of the network.

A step comprises receiving specific network data through a network function, operated in a programmable forwarding plane of the network device by the network device along the network path. In other words, the respective network device provides the respective programmable forwarding plane and the respective network device receives the specific network data through the network function operated in the programmable forwarding plane.

In a next step, the programmable forwarding plane of the respective network device forwards the specific network data to a respective compute function operated by the respective network device according to a respective network function of the respective network device.

In a next step, the specific network data is processed by the respective compute function operated by the respective network device. The processing may be related to a payload of the specific network data.

After the specific network data has been processed by the compute function of the respective network device, the compute function of the respective network device provides the processed specific network data to the programmable forwarding plane of the respective network device. The network function operated in the programmable forwarding plane forwards the processed specific network data to the network.

A last of the network devices may forward the network data to a target device of the network.

A third aspect of the present invention relates to a workflow orchestration module for a network.

The workflow orchestration module is configured to receive a workflow specification. The workflow specification defines processing of network data to be performed in a workflow along a network path through the network. Depending on the capabilities of the network devices along the network paths, the workflow orchestration module is configured to decompose the workflow described by the workflow specification into a chain of workflow functions described by corresponding workflow function specifications. The respective workflow functions concern a respective step of the processing of the network data by the workflow. The workflow orchestration module is configured to assign the respective workflow functions to the network devices along the network path. The workflow orchestration module is configured to provide the workflow function specifications assigned to the respective network devices to a function orchestration module of the network.

A fourth aspect is related to a network comprising a workflow orchestration module according to the third aspect of the present invention.

A fifth aspect of the invention is related to a computer program product comprising program code for performing a method according to the first aspect. The computer program product may also be regarded to a computer program.

A sixth aspect of the invention is related to a computer-readable storage medium comprising at least the computer program product according to the fifth aspect.

For use cases or use situations which may arise in the methods and which are not explicitly described here, it may be provided that, in accordance with the methods, an error message and/or a prompt for user feedback is output and/or a default setting and/or a predetermined initial state is set.

Independent of the grammatical term usage, individuals with male, female or other gender identities are included within the term.

The workflow orchestration module, the function orchestration module and the network device may comprise computing devices to perform steps of the methods.

A computing device may in particular be understood as a data processing device, which comprises processing circuitry. The computing device may therefore in particular process data to perform computing operations. This may also include operations to perform indexed accesses to a data structure, for example a look-up table, LUT.

In particular, the computing device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing device may also include one or more processors, for example one or more microprocessors, one or more central processing devices, CPU, one or more graphics processing devices, GPU, and/or one or more signal processors, in particular one or more digital signal processors, DSP. The computing device may also include a physical or a virtual cluster of computers or other of said devices.

In various embodiments, the computing device includes one or more hardware and/or software interfaces and/or one or more memory devices.

A memory device may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.
- FIG 1: shows a schematic illustration of a problem that may arise during a configuration of a network for in-network computing of network data;
- FIG 2: shows a schematic illustration of a method to configure a network for in-network computing of network data;
- FIG 3: shows a schematic illustration of a processing of the network data along the network path; and
- FIG 4: shows a schematic illustration of a method to configure a network.

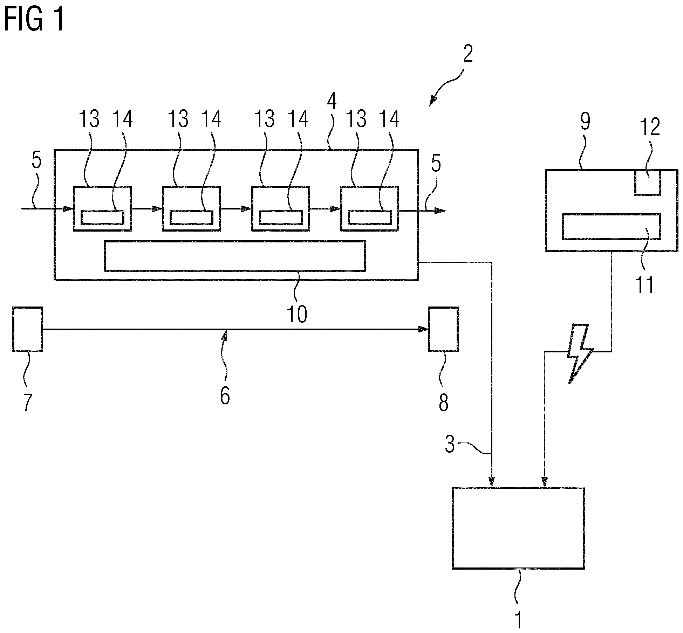

FIG 1 shows a schematic illustration of a problem that may arise during a configuration of a network 2 for in-network 2 computing of network data 5.

A function orchestration module 1 of the network 2 may receive a workflow specification 3 describing a workflow 4 to be performed on network data 5 sent through the network 2 along a network path 6 from a source device 7 to a target device 8 via network devices 9. The workflow 4 may have workflow requirements 10 describing the requirements on a network device 9 to perform the workflow 4. The function orchestration module 1 may generate a respective compute function 11 according to the workflow specification 3. The compute function 11 may be configured to process the network data 5 by the network device 9 according to the workflow specification 3. However, the workflow requirements 10 may be too high for the capabilities 12 of the network device 9. Therefore, it may not be possible to process the network data 5 by the network 2.

The workflow 4 as specified by the workflow specification 3 may comprise steps of the network data processing. Therefore, it may be possible to decompose the workflow 4 into a chain of workflow functions 13. The workflow functions 13 may have respective workflow function requirements 14. The workflow function requirements 14 may be lower than the workflow requirements 10 of the workflow 4.

FIG 1 illustrates the challenge: A workflow 4 is to be deployed to a network device 9 by the function orchestration module 1. The workflow 4 may be complex, and each workflow function 13 in the workflow 4 may have workflow function requirements 14. In addition, the workflow 4 may have its own workflow requirements 10. The network device 9 might not be able to handle such a complex workflow 4, for example, due to limited RAM, storage, or CPU. As a result, it might not be possible to use the Function Orchestration module 1 for deployment.

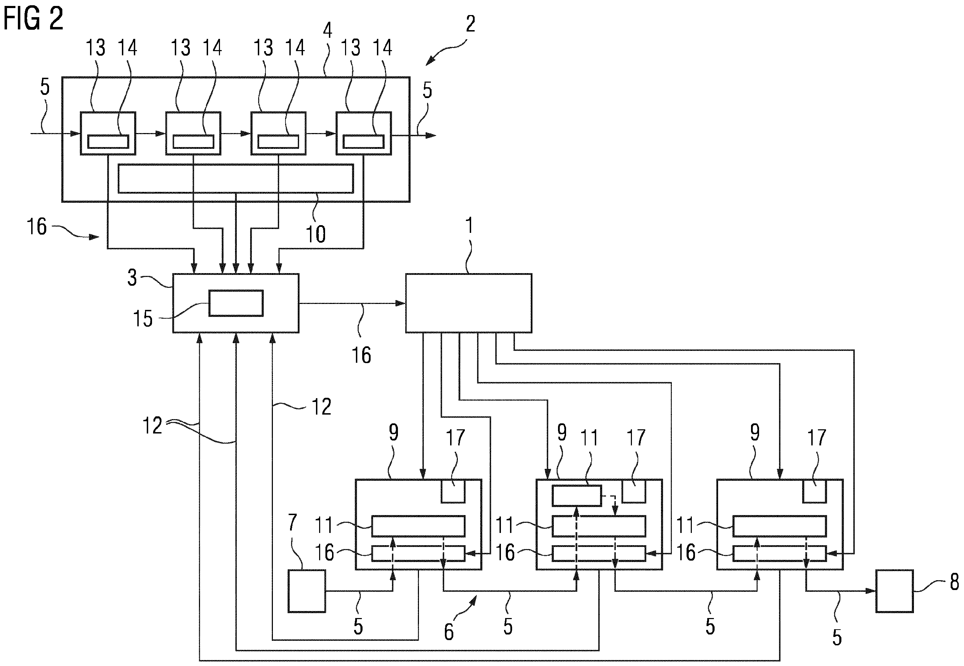

FIG 2 shows a schematic illustration of a method to configure a network 2 for in-network 2 computing of network data 5.

The workflow specification 3 may be provided to a workflow orchestration module 15 of the network 2. The workflow orchestration module 15 may be configured to decompose the workflow 4 described by the workflow specification 3 into a chain of workflow functions 13. To allow a processing of the network data 5 by the network 2 it may be intended to separate the workflow functions 13 to the network devices 9 along the network path 6. The workflow orchestration module 15 may generate respective function specifications describing the respective workflow functions 13. The workflow orchestration module 15 may investigate the workflow function requirements 14 of the respective workflow functions 13. The respective capabilities 12 of the network devices 9 along the network path 6 may be provided to the workflow orchestration module 15. The workflow orchestration module 15 may assign the respective workflow functions 13 to the respective network devices 9 of the network path 6. The workflow orchestration module 15 may be configured to provide the workflow function specifications 16 assigned to the respective network devices 9 to the function orchestration module 1 of the network 2. The function orchestration module 1 may be configured to generate respective compute functions 11 for the respective network devices 9 according to the provided workflow function specifications 16. To allow a forwarding of the network data 5 along the chain of compute functions 11 the function orchestration module 1 may be configured to generate respective network functions 17 for the respective network devices 9. The respective network functions 17 may define the forwarding behaviour of the programmable forwarding planes 18 of the respective network devices 9. The function orchestration module 1 may provide the respective network functions 17 to the respective network devices 9 along with the respective compute functions 11.

The approach uses a workflow orchestration module 15 to handle complex workflows 4 for deployment to in-network 2 processing-capable infrastructures. Therefore, it takes care of properly decomposing a workflow 4 into workflow functions 13, considering existing processing requirements, and using components for deployment to in-network processing capable infrastructures. FIG 2 shows the interaction of the main components and artifacts.

The workflow functions 13 represent mathematical functions or algorithms that are used to handle/process network data 5 from, for example, industrial sensor systems. Functions are the smallest possible unit that can be executed separately. It has defined input and output, is generally stateless, can be accompanied by meta-information, and can have functional requirements for proper execution. Functions can be created either based on templates, such as filters, or based on mathematical decomposition of the workflow specification 3.

Workflow function requirements 14 are specific to workflow functions 13 and can include, for example, inputs/outputs, supported CPU instruction set, support for specific computing extensions GPU, and processing time requirements. These requirements relate to the specific execution of a single workflow function 13.

The workflow 4 is an extended set of workflow functions 13 by forming a chain of workflow functions 13. Thus, a workflow 4 also aggregates the workflow function requirements 14 and also has workflow-specific workflow requirements 10. The workflow 4 defines the order of the workflow functions 13 to be executed, as well as their inputs and outputs. A workflow 4 can be disaggregated for distributed execution of workflow functions 13.

Workflow requirements 10 refer to the end-to-end requirements of a workflow function 13 chain and the order in which workflow functions 13 are executed, such as which workflow functions 13 are interdependent and which can be executed in parallel.

The workflow orchestration module 15 is the main component. It can decompose a workflow 4 into all of its workflow functions 13, creating a workflow function chain. It can also take into account the workflow function requirements 14 of the workflow functions 13 as well as the workflow requirements 10 when creating a workflow function chain, based on the capabilities 12 of the network devices 9 involved. The workflow orchestration Module 15 decides which workflow functions 13 are hosted on which set of network devices 9, including co-location of workflow functions 13.

The workflow orchestration module 15 creates workflow function specifications 16 for the function orchestration module 1 and triggers the deployment of the workflow functions 13 of the disaggregated workflow 4 through the function orchestration module 1.

The function orchestration module 1 provides the required compute function 11 to be executed on the network data 5 transmitted by the user application.

The function orchestration module 1 creates and deploys a compute function 11 instance to an appropriate network device 9 according to the defined user application requirements specified in the workflow function specification 16 and the metadata provided with the function.

The function orchestration module 1 creates and deploys an appropriate network function 17 to the appropriate network device 9.

The function orchestration module 1 manages the user application's access to the network data 5 to be processed by the compute function 11.

The function orchestration module 1 provides an interface for interacting with the workflow orchestration module 15. Its primary task is to deploy compute functions 11 to network devices 9 based on instructions received from the Workflow orchestration Module 15. The function orchestration module 1 therefore configures network devices 9 and their programmable forwarding planes 18 according to the configuration goals received from the workflow orchestration module 15. The function orchestration module 1 may be configured to receive instructions from a user application regarding data processing, e.g. filtering, fusion of network data 5, and may create an appropriate compute function 11 for processing. For example, if a low-pass filter is to be applied, a template for a low-pass filter can be retrieved from the function repository and parameterized according to the user application's requirements.

The compute function 11 can be deployed on network devices 9 and can be realized either as an application running in the operating system or as an application running on a data processing unit of a network 2 interface card. The compute function 11 receives network data 5 packets from the programmable forwarding plane 18 directly or through the operating system protocol stack. The function must then pass through authentication, authorization, and accounting to validate that the correct compute function 11 is processing the correct network data 5 stream packet on the correct network device 9. After successful authentication, authorization, and accounting, the compute function 11 can process the payload. The compute function 11 may also receive the network data 5 from different data packet streams, for example, to perform data fusion tasks. After processing, the network data 5 containing the result of the processing may be sent to the target device 8. Therefore, the compute function 11 can create a new data packet, including optional security mechanisms such as encryption, and send it to the programmable forwarding plane 18 for further packet handling.

The network function 17 may consist of executable code that can run in the programmable forwarding plane 18 of a network device 9. This configuration artifact is created by the function orchestration module 1 and ensures that the data packets of interest from the network data 5 are captured and forwarded to the appropriate function for processing, where the compute function 11 may be either a function running in the operating system or a function on a data processing unit.

The proposed approach addresses the problem that realizing an application as a single complex compute function 11 easily can require to high computational resources to be executed on a single network device 9. The typical approach from system and software design is function decomposition. The complete end-to-end function will be decomposed into a chain of smaller functions, where each of the functions is small enough to be executed on single device. This chain of functions is then executed subsequently. To realize this functions chains the workflow orchestration module 15 is provided.

The workflow orchestration module 15 may handle such a situation as described in FIG 2. In addition, such an approach to decomposing the workflow 4 allows for a higher reusability of functions and a higher potential for execution optimization, such as parallelizing function execution.

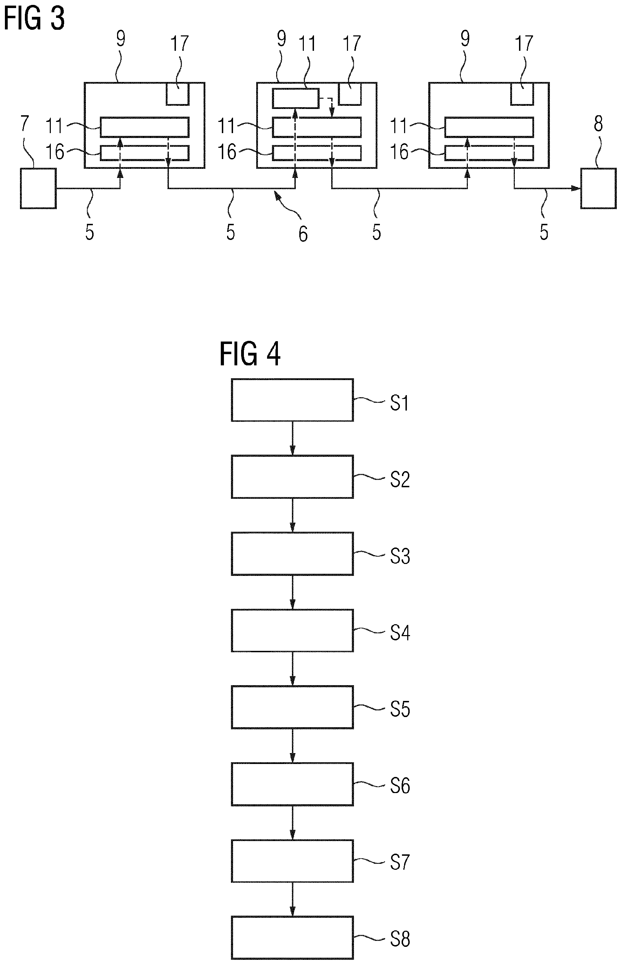

FIG 3 shows a schematic illustration of a processing of the network data 5 along the network path 6.

A source device 7 of the network 2 may provide the network data 5 to a first of the network devices 9. The first of the network devices 9 may receive the network data 5 via its programmable forwarding plane 18. A network function 17 operated in the programmable forwarding plane 18 may forward the network data 5 to the compute function 11 operated on the first network device 9. The compute function 11 may process the network data 5 as defined in the workflow function specification 16. The compute function 11 may provide the network data 5 to the programmable forwarding plane 18 of the network device 9. The network function 17 operated in the programmable forwarding plane 18 of the network device 9 may be configured to provide the processed network data 5 to a following network device 9 of the network path 6. Therefore, the first of the network devices 9 may forward the processed network data 5 to a second of the network devices 9.

The second of the network devices 9 may receive the network data 5 from the first of the network devices 9 via its programmable forwarding plane 18. The respective network function 17 in the programmable forwarding plane 18 may forward the network data 5 to a first compute function 11 operated on the second of the network devices 9. The first of the compute functions 11 may process the network data 5 and provide the processed network data 5 to a second compute function 11 operated on the second network device 9. The second compute function 11 may process the network data 5 and provide the processed network data 5 to the programmable forwarding plane 18. The respective network function 17 in the programmable forwarding plane 18 may forward the processed network data 5 to a third of the network devices 9 of the network 2 chain.. A third of the network devices 9 of the network path 6 may also receive the network data 5 via its programmable forwarding plane 18. The respective network function 17 of the programmable forwarding plane 18 may forward the network data 5 to the compute function 11.. After processing the network data 5 by the compute function 11, the compute function 11 may provide the network data 5 to the programmable forwarding plane 18. The network function 17 in the programmable forwarding plane 18 may provide the processed network data 5 to the target device 8.

FIG 4 shows a schematic illustration of a method to configure a network 2.

In a first step S1 the workflow orchestration module 15 of the network 2 may receive a workflow specification 3 specifying processing of network data 5 to be performed in a workflow 4 along a network path 6 through the network 2.

In a second step S2, the workflow orchestration module 15 may decompose the workflow 4 described by the workflow specification 3 into a chain of workflow functions 13 described by respective workflow function specifications 16, wherein the respective workflow functions 13 concern a respective step of the processing of the network data 5 by the workflow 4.

In a third step S3, the workflow orchestration module 15 may assign the respective workflow functions 13 to the network devices 9 along the network path 6.

In a fourth step S4, the workflow orchestration module 15 may provide the workflow function specifications 16 assigned to the respective network devices 9 to a function orchestration module 1 of the network 2.

In a next step S5, the function orchestration module 1 may receive the workflow function specifications 16 assigned to the respective network devices 9.

In a next step S6, the function orchestration module 1 may generate respective compute functions 11 for the network devices 9 configured to perform the respective steps of the processing of the network data 5 according to the workflow function specifications 16. The function orchestration module 1 may generate respective network functions 17 for the respective network devices 9 in a step S7, wherein the network functions 17 are configured to forward the network data 5 received by the respective network devices 9 to the compute functions 11 operated by the respective network devices 9 and to forward the processed specific network data 5.

In a next step S8, the function orchestration module 1 may provide the respective compute functions 11 and the respective network functions 17 to the respective network devices 9.

The approach provides a mechanism to easily and automatically deploy complex applications and functions in communication networks 2 with in-network 2 computing capabilities that do not exist today. The workflow orchestration module 15 allows both end-to-end workflow 4 and application requirements and specific function requirements to be considered in parallel in an automated manner, allowing dynamic use of in-network 2 computing resources. The approach enables function reuse through the concept of function chaining. The workflow orchestration module 15 allows to set up in-network 2 processing for complex workflows 4, taking into account QoS requirements, e.g. by using programmable forwarding plane 18 functionality. This approach enables support for in-network 2 processing based industrial control applications, such as placing a controller on a data processing unit or close programmable forwarding plane 18 and pre-processing data on the communication channel.

## Claims

1. Method to configure a network (2) for in-network (2) computing of network data (5), comprising the following steps performed by a workflow orchestration module (15) of the network (2):
- receiving a workflow specification (3), the workflow specification (3) defining processing of network data (5) to be performed in a workflow (4) along a network path (6) through the network (2);
- depending on capabilities (12) of network devices (9) along the network path (6), decomposing the workflow (4) described by the workflow specification (3) into a chain of workflow functions (13) described by respective workflow function specifications (16), wherein the respective workflow functions (13) concern a respective step of the processing of the network data (5) by the workflow (4);
- assigning the respective workflow functions (13) to the network devices (9) along the network path (6); and
- providing the workflow function specifications (16) assigned to the respective network devices (9) to a function orchestration module (1) of the network (2).

2. Method according to claim 1, comprising the following steps performed by the function orchestration module (1) of the network (2):
- Receiving the workflow function specifications (16) assigned to the respective network devices (9);
- generating respective compute functions (11) for the network devices (9), configured to perform the respective steps of the processing of the network data (5) according to the workflow function specifications (16);
- generating respective network functions (17) for the respective network devices (9), wherein the network functions (17) are configured to forward the network data (5) received by the respective network devices (9) to the compute functions (11) operated by the respective network devices (9) and to forward the processed specific network data (5) to the network (2); and
- providing the respective compute functions (11) and the respective network functions (17) to the respective network devices (9).

3. Method according to claim 1 or 2, **characterised in that**,
- the assigning of the respective workflow functions (13) to the network devices (9) along the network path (6) comprises an investigation of workflow function requirements (14) of the respective workflow functions (13) and an assigning of the respective workflow functions (13) to the network devices (9) depending on capabilities (12) of the respective network devices (9).

4. Method according to any of the preceding claims,
**characterised in that**,
- the assigning of the respective workflow functions (13) to the network devices (9) along the network path (6) comprises an investigation of QoS requirements of the respective workflow functions (13) and an assigning of the respective workflow functions (13) to the network devices (9) depending on forwarding capabilities of the programmable forwarding plane (18) of the respective network devices (9).

5. Method according to any of the preceding claims,
**characterised in that**,
- the assigning of the respective workflow functions (13) to the network devices (9) along the network path (6) comprises a check whether the respective workflow functions (13) are parallelizable, wherein respective parallelizable workflow functions (13) are assigned to at least two of the network devices (9).

6. Method according to any of the preceding claims 2 to 5, **characterised in that** the generating of the compute function (11) comprises steps of:
- retrieving from a function repository module at least one compute function template according to the workflow function specification (16); and
- configuring the at least one compute function template according to the workflow function specification (16); and
- generating the compute function (11) based on the at least one configured compute function template.

7. Method according to any of the preceding claims 2 to 6, **characterised in that** the compute function (11) is configured as an application running in an operation system of the network device (9).

8. Method according to any of the preceding claims 2 to 7, **characterised in that** the compute function (11) is configured as an application running on a data processing unit of a network interface card of the network device (9).

9. Method to operate a network (2) for in-network computing of network data (5), comprising the following steps performed by network devices (9) along a network path (6) of the network (2):
- receiving specific network data (5) by a programmable forwarding plane (18) of a respective of the network devices (9) along the network path (6);
- forwarding the specific network data (5) to a compute function (11) operated by the respective network device (9) by a network function (17);
- processing the specific network data (5) by the compute function (11);
- providing the processed specific network data (5) to the programmable forwarding plane (18);
- forwarding the processed specific network data (5) by the network function (17).

10. Workflow orchestration module (15) for a network (2), wherein the workflow orchestration module (15) is configured to
- receive a workflow specification (3), the workflow specification (3) defining processing of network data (5) to be performed in a workflow (4) along a network path (6) through the network (2);
- depending on capabilities (12) of network devices (9) along the network path (6), decompose the workflow (4) described by the workflow specification (3) into a chain of workflow functions (13) described by respective workflow function specifications (16), wherein the respective workflow functions (13) concern a respective step of the processing of the network data (5) by the workflow (4);
- assign the respective workflow functions (13) to the network devices (9) along the network path (6); and
- provide the workflow function specifications (16) assigned to the respective network devices (9) to a function orchestration module (1) of the network (2).

11. Network (2), comprising a workflow orchestration module (15) according to claim 10.

12. A computer program product comprising program code for performing a method according to any one of the claims 1 to 8 or claim 9.

13. A computer-readable storage medium comprising at least the computer program product according to claim 12.
